# EUROPÄISCHE PATENTSCHRIFT

(11) **EP 3 323 491 B1**
(45) Veröffentlichungstag und Bekanntmachung des Hinweises auf die Patenterteilung: **25.03.2020**
(21) Anmeldenummer: 17198325.7
(22) Anmeldetag: 25.10.2017
(51) Int. Cl.: B01D 35/18, B01D 27/08

(54) **KRAFTSTOFFFILTERKARTUSCHE**
FUEL FILTER CARTRIDGE
CARTOUCHE FILTRANTE À CARBURANT

(30) Priorität: 18.11.2016 DE 102016222738
(43) Veröffentlichungstag der Anmeldung: 23.05.2018
(73) Patentinhaber: Mahle International GmbH, 70376 Stuttgart (DE)
(72) Erfinder: HOFFMANN, Dierk, 71229 Leonberg (DE); PRAPROTNIG, Heinz, 9142 Globasnitz (AT); SCHADLER, Werner, 8430 Seggauberg (AT); WETZL, Mario, 9125 Kühnsdorf (AT)
(74) Vertreter: BRP Renaud & Partner mbB Rechtsanwälte Patentanwälte Steuerberater

(56) Entgegenhaltungen:
- EP-A1- 1 702 662
- EP-A1- 2 806 148
- DE-A1-102005 040 417
- DE-A1-102007 005 771
- DE-A1-102010 043 218
- DE-A1-102011 088 879
- DE-A1-102014 010 389

## Beschreibung

Die vorliegende Erfindung betrifft eine Kraftstofffilterkartusche zum Filtern und Beheizen von Kraftstoff für eine Brennkraftmaschine, vorzugsweise in einem Kraftfahrzeug. Die Erfindung betrifft außerdem ein Verfahren zum Herstellen einer derartigen Kraftstofffilterkartusche.

Eine Kraftstofffilterkartusche, die auch als Kraftstofffilterpatrone bezeichnet werden kann, umfasst üblicherweise ein topfförmiges Gehäuse, das einen in Umfangsrichtung verlaufenden Gehäusemantel, einen Gehäuseboden und eine den Gehäuseboden axial gegenüberliegende Gehäuseöffnung aufweist. In dieses Gehäuse ist ein Filterelement zum Filtern des Kraftstoffs eingesetzt, das im Gehäuse einen Rohraum von einem Reinraum trennt. Die Gehäuseöffnung wird mit Hilfe eines Deckels verschlossen. Ferner sind in üblicher Weise ein Einlassstutzen für den Kraftstoff, der mit dem Rohraum fluidisch verbunden ist, und ein Auslassstutzen für den Kraftstoff vorgesehen, der mit dem Reinraum fluidisch verbunden ist. Grundsätzlich kann der Deckel aus Metall hergestellt sein, wobei er dann zweckmäßig entlang seines Deckelrands mit einem stirnseitigen Gehäuserand am Mantel vercrimpt sein kann, um eine hinreichend dichte und feste Fixierung des Deckels am Gehäuse zu erzielen.

Eine derartige Kartusche kann außerdem mit einer elektrischen Heizeinrichtung zum Beheizen des Kraftstoffs ausgestattet sein, die hierzu im Gehäuse angeordnet ist. Ferner ist ein Elektroanschluss, der zur elektrischen Energieversorgung der Heizeinrichtung dient und der hierzu elektrisch leitend mit der Heizeinrichtung verbunden ist, zweckmäßig an dem genannten Deckel ausgebildet, der hierzu bevorzugt aus einem Kunststoff hergestellt wird. Wird der Deckel jedoch, z.B. zwecks elektrischer Isolation und/oder aus Kostengründen, aus Kunststoff hergestellt, kann zum Herstellen der vorstehend genannten Crimpverbindung eine Druckplatte in Verbindung mit einem Crimpring zum Einsatz kommen. Der Crimpring wird hierzu mit dem Gehäuserand vercrimpt und stützt sich axial an der Druckplatte ab, die sich ihrerseits axial am Deckel abstützt. Eine derartige Druckplatte liegt radial beabstandet vom Crimpring und/oder vom ringförmig umlaufenden Plattenrand flächig am Deckel an. Insbesondere liegt die Druckplatte innerhalb einer vom Crimpring eingefassten Crimpringöffnung flächig am Deckel an.

Das "Crimpen" ist ein Fügeverfahren, bei dem zwei Komponenten durch plastische Verformung, vorzugsweise in aneinander anliegenden Randbereichen, miteinander verbunden werden, beispielsweise durch Bördeln, Quetschen, Kräuseln oder Falten. Das Herstellen einer derartigen Crimpverbindung erfolgt mit einem entsprechenden Crimpwerkzeug, das einen gewissen Freiraum im Bereich der miteinander zu vercrimpenden Randbereiche benötigt. Dieser Freiraum steht bei einer solchen Kartusche im Bereich des Elektroanschlusses jedoch nicht immer zur Verfügung, insbesondere dann, wenn sich der Elektroanschluss radial bis in den Bereich der Vercrimpung erstreckt. Aufgrund unterschiedlicher Konfigurationen seitens der Fahrzeughersteller bieten die Hersteller der Kraftstofffilterkartuschen entsprechend unterschiedliche Elektroanschlüsse an. Sofern sich je nach Konfiguration des Elektroanschlusses das vorstehend genannte Freiraumproblem für die Crimpverbindung ergibt, müssen entsprechende Anpassungen am Gehäuse und/oder am Deckel der jeweiligen Kraftstofffilterkartusche durchgeführt werden. Dies kann außerdem eine entsprechende Anpassung des Filterelements nach sich ziehen. Dementsprechend müssen die Hersteller der Kraftstofffilterkartuschen für unterschiedliche Konfigurationen der Elektroanschlüsse unterschiedliche Gehäuse, unterschiedliche Deckel und ggf. unterschiedliche Filterelemente bereitstellen, was den Herstellungsaufwand sowie den entsprechenden logistischen Aufwand und somit die Herstellungskosten erhöht.

Die Dokumente EP 2 806 148 A1 und DE 10 2010 043 218 A1 beschreiben eine Kartusche gemäß dem Oberbegriff des Anspruchs 1. Die Fixierung der Druckplatte erfolgt am Gehäuse dadurch, dass am stirnseitigen Gehäuserand des Gehäuses ein außen umlaufender Flansch angebracht ist, vermutlich angelötet oder angeschweißt, mit dem die Druckplatte vermutlich verschraubt ist.

Die vorliegende Erfindung beschäftigt sich mit dem Problem, für eine Kraftstofffilterkartusche sowie für ein zugehöriges Herstellungsverfahren eine verbesserte Ausführungsform anzugeben, die sich insbesondere durch reduzierte Herstellungskosten auszeichnet und die insbesondere eine vereinfachte Variantenbildung ermöglicht.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, den Elektroanschluss in einen Basisstecker und einen bezüglich des Basissteckers separaten Adapterstecker aufzugliedern, wobei nur der Basisstecker am Deckel ausgebildet ist, während über den Adapterstecker die Variantenbildung zur Berücksichtigung unterschiedlicher Konfigurationen der Elektroanschlüsse erfolgt. Das bedeutet, dass für alle üblichen Konfigurationen der Elektroanschlüsse nur verschiedene Adapterstecker bereitgestellt werden müssen, während alle übrigen Komponenten der Kraftstofffilterkartusche baugleich ausgeführt werden können. Hierdurch werden die Herstellungskosten signifikant reduziert. Von besonderem Vorteil ist dabei der Umstand, dass sich der Basisstecker am Deckel besonders einfach so positionieren lässt, dass der zur Realisierung der vorstehend genannten Crimpverbindung erforderliche Freiraum stets gewährleistet ist. Da sich die Crimpverbindung vor dem Anbringen des Adaptersteckers realisieren lässt, kann diese problemlos hergestellt werden. Anschließend lässt sich der Adapterstecker anbringen, um abhängig von der jeweiligen Kartuschenvariante die jeweils gewünschte Konfiguration für den Elektroanschluss zu erzeugen.

Im Einzelnen schlägt die Erfindung vor, dass eine bezüglich des Deckels separate Druckplatte vorgesehen wird, die an einer vom Gehäuseboden abgewandten Außenseite des Deckels axial am Deckel anliegt. Ferner wird ein bezüglich des Deckels separater Crimpring vorgesehen, der sich an einer vom Gehäuseboden abgewandten Außenseite der Druckplatte an einem Plattenrand der Druckplatte axial abstützt und der mit einem die Gehäuseöffnung einfassenden, am Mantel ausgebildeten, stirnseitigen Gehäuserand vercrimpt ist. Mit anderen Worten, bei der erfindungsgemäßen Kraftstofffilterkartusche wird nicht der Deckel selbst mit dem Gehäuse vercrimpt, sondern der Crimpring, der sich über die Druckplatte am Deckel abstützt, um die gewünschte axiale Positionierung des Deckels relativ zum Gehäuse zu bewirken. Wie erwähnt besitzt der Elektroanschluss einen am Deckel ausgebildeten Basisstecker, der mit der Heizeinrichtung elektrisch verbunden ist und der mit einem Adapterstecker steckbar ist, der mit der Energieversorgung elektrisch verbindbar ist. Der Basisstecker ist somit am Deckel ausgebildet und steht von dessen Außenseite axial nach außen ab. Die Druckplatte besitzt radial beabstandet vom Plattenrand eine in der Umfangsrichtung geschlossene Durchtrittsöffnung für den Basisstecker. Druckplatte und Deckel sind so aufeinander abgestimmt, dass sich die Druckplatte axial so an der Außenseite des Deckels anbringen lässt, dass dabei der Basisstecker durch die zugehörige Durchtrittsöffnung axial hindurchgeführt wird. Das bedeutet, dass der quer zur Axialrichtung gemessene Querschnitt des Basissteckers kleiner ist als der Querschnitt der jeweiligen Durchtrittsöffnung. Durch die radiale Beabstandung der jeweiligen Durchtrittsöffnung vom Plattenrand und durch die axiale Ausrichtung des Basissteckers, die das axiale Aufsetzen der Druckplatte auf den Deckel ermöglicht, wird der für das Crimpverfahren benötigte Freiraum gewährleistet.

Der Einlassstutzen kann ebenfalls am Deckel angeordnet sein. Ebenso ist denkbar, den Einlassstutzen am Gehäuse, vorzugsweise am Gehäuseboden, anzubringen. Der Auslassstutzen kann ebenfalls am Deckel angeordnet sein. Ebenso ist denkbar, den Auslassstutzen am Gehäuse, vorzugsweise am Gehäuseboden, anzubringen. Sofern der Einlassstutzen und/oder der Auslassstutzen am Deckel angeordnet sind, steht der jeweilige Stutzen von der Außenseite des Deckels axial nach außen ab. Die Druckplatte besitzt radial beabstandet vom Plattenrand wenigstens eine in der Umfangsrichtung geschlossene Durchtrittsöffnung für den Einlassstutzen und/oder für den Auslassstutzen. Druckplatte und Deckel sind so aufeinander abgestimmt, dass sich die Druckplatte axial so an der Außenseite des Deckels anbringen lässt, dass dabei der Einlassstutzen und/oder der Auslassstutzen durch die jeweils zugehörige Durchtrittsöffnung axial hindurchgeführt werden. Das bedeutet, dass die quer zur Axialrichtung gemessenen Querschnitte von Einlassstutzen und/oder Auslassstutzen kleiner sind als der Querschnitt der jeweiligen Durchtrittsöffnung.

Gemäß einer vorteilhaften Ausführungsform kann der Elektroanschluss außerdem den Adapterstecker aufweisen, der mit dem Basisstecker axial gesteckt ist, so dass elektrische Kontakte des Basissteckers mit elektrischen Kontakten des Adaptersteckers elektrisch verbunden sind. Der Adapterstecker selbst kann beispielsweise einen Querschnitt besitzen, der so groß ist, dass sich der Adapterstecker nicht durch die dem Basisstecker zugeordnete Durchtrittsöffnung hindurchführen lässt. Ferner kann der Adapterstecker räumlich so dimensioniert sein, dass nach dem Anbringen des Adaptersteckers am Basisstecker der für das Crimpverfahren erforderliche Freiraum nicht mehr vorhanden ist. Dies stellt jedoch für die Herstellung der hier vorgestellten Kraftstofffilterkartusche kein Problem dar, da der Adapterstecker zweckmäßig erst nach dem Herstellen der Crimpverbindung mit dem Basisstecker gesteckt wird. Der Adapterstecker besitzt nun seinerseits eine elektromechanische Schnittstelle zum elektrischen und mechanischen Verbinden eines entsprechenden komplementären Anschlusssteckers, der mit der, insbesondere fahrzeugseitigen, Energieversorgung elektrisch verbunden ist und der vom jeweiligen Fahrzeughersteller vorgegeben ist. Somit lässt sich über entsprechend angepasste Adapterstecker die im Übrigen identische Kraftstofffilterkartusche an unterschiedliche fahrzeugseitige Anschlussstecker adaptieren.

Vorteilhaft kann der Adapterstecker mittels einer axialen Steckverbindung mechanisch und elektrisch mit dem Basisstecker verbunden sein. Derartige axiale Steckverbindungen lassen sich besonders einfach montieren, wodurch die Herstellung zuverlässig und zeitsparend durchführbar ist.

Zweckmäßig kann die Steckverbindung eine Verrastung aufweisen, welche die mechanische Verbindung zwischen Adapterstecker und Basisstecker gegen ein Herausziehen entgegen der axialen Steckrichtung sichert. Üblicherweise arbeitet eine derartige Verrastung mit einem Formschluss.

Eine andere vorteilhafte Ausführungsform sieht vor, dass sich der mit dem Basisstecker gesteckte Adapterstecker radial bis zum Crimpring erstreckt. In diesem Fall besitzt der Adapterstecker eine Konfiguration, die ein Crimpen bei montiertem Adapterstecker behindern würde. Die vorstehend genannte elektromechanische Schnittstelle des Adaptersteckers kann ebenfalls als Steckverbindung konfiguriert sein. Dabei kann die Steckrichtung dieser Steckverbindung parallel zur Steckrichtung der Steckverbindung zwischen Adapterstecker und Basisstecker ausgerichtet sein. Ebenso ist es möglich, den Adapterstecker als Winkelstecker auszugestalten, bei dem die Steckrichtung der Steckverbindung der elektromechanischen Schnittstelle gegenüber der Steckrichtung der Steckverbindung zwischen Adapterstecker und Basisstecker geneigt verläuft. Beispielsweise können sich die beiden Steckrichtungen rechtwinklig zueinander erstrecken.

Bei einer anderen Ausführungsform kann die jeweilige Durchtrittsöffnung radial vom Crimpring beabstandet sein. Auf diese Weise kann auch eine Wechselwirkung zwischen Einlassstutzen, Auslassstutzen und Basisstecker und dem Crimpring während des Crimpverfahrens vermieden werden.

Der Crimpring kann an der Druckplatte befestigt sein, beispielsweise durch eine Lötverbindung oder eine Schweißverbindung oder eine Klebverbindung. Ebenso ist denkbar, dass der Crimpring lose an der Druckplatte axial anliegt, so dass also keine feste Verbindung zwischen Crimpring und Druckplatte vorliegt.

Sofern Einlassstutzen und/oder Auslassstutzen sowie der Basisstecker am Decken angeordnet sind, kann grundsätzlich für den Einlassstutzen und/oder den Auslassstutzen sowie den Basisstecker an der Druckplatte eine einzige, gemeinsame Durchtrittsöffnung vorgesehen sein. Vorzugsweise ist jedoch für den Basisstecker eine separate Durchtrittsöffnung vorgesehen, durch die nur der Basisstecker hindurchgeführt ist. Für den Einlassstutzen und den Auslassstutzen kann grundsätzlich eine gemeinsame Durchtrittsöffnung vorgesehen sein. Besonders vorteilhaft ist jedoch eine Ausführungsform, bei der jeweils eine separate Durchtrittsöffnung für den Einlassstutzen, den Auslassstutzen und den Basisstecker vorgesehen ist. Hierdurch lässt sich eine großflächige axiale Abstützung des Deckels an der Druckplatte realisieren.

Bevorzugt kann der Deckel aus Kunststoff hergestellt sein, wobei insbesondere ein Steckergehäuse des Basissteckers integral am Deckel ausgeformt ist. Optional können auch der Einlassstutzen und/oder der Auslassstutzen integral am Deckel ausgeformt sein. Hierdurch erhält der Deckel einen hohen Integrationsgrad, was die Herstellungskosten der Kraftstofffilterkartusche reduziert. Die metallischen elektrischen Kontakte des Basissteckers können entweder nachträglich in das Steckergehäuse eingebaut sein oder vom Kunststoff des Steckergehäuses bzw. des Deckels umspritzt sein.

Der Deckel kann an einem radial außenliegenden Deckelrand mit einer umlaufenden Dichtung gegenüber dem Mantel abgedichtet sein. Durch diese Dichtung zwischen Deckel und Mantel muss die Crimpverbindung zwischen Crimpring und Gehäuse nicht zwingend flüssigkeitsdicht ausgestaltet sein. Die Crimpverbindung bewirkt dann nur die mechanische Fixierung des Deckels im Gehäuse. Diese Dichtung kann integral am Deckelrand ausgeformt sein. Ebenso kann diese Dichtung aus einem anderen Kunststoff an den Deckelrand angespritzt oder angeschäumt sein. Alternativ kann eine separate Dichtung, z.B. in Form eines O-Rings zum Einsatz kommen. Dementsprechend kann der Deckelrand bei einer vorteilhaften Ausführungsform radial außen eine Umfangsnut aufweisen, in die eine radial wirkende Dichtung eingesetzt ist, die sich radial am Mantel abstützt.

Besonders vorteilhaft ist eine Ausführungsform, bei welcher die Heizeinrichtung am Deckel ausgebildet ist und an einer dem Gehäuseboden zugewandten Innenseite des Deckels angeordnet ist. Diese Bauweise hat den Vorteil, dass die Heizeinrichtung am Deckel vormontierbar ist und dass bei der Montage der Deckel zusammen mit der Heizeinrichtung in das Gehäuse einsetzbar ist. Des Weiteren kann auf diese Weise die Heizeinrichtung nahe am Einlassstutzen angeordnet werden, um den Kraftstoff vor Erreichen des Filterelements bedarfsabhängig zu beheizen.

Vorteilhaft ist eine Weiterbildung, bei der die Heizeinrichtung eine Scheibe aufweist, die einen rohseitigen, also einen auf der Rohseite bzw. im Rohraum angeordneten, Heizraum axial begrenzt, der axial zwischen der Scheibe und dem Deckel ausgebildet ist. Der Einlassstutzen ist mit diesem Heizraum fluidisch verbunden. Sofern der Einlassstutzen zweckmäßig am Deckel ausgebildet ist, kann der Einlassstutzen in diesen Heizraum direkt einmünden. Die Scheibe weist zumindest eine axiale Verbindungsöffnung auf, die den Heizraum fluidisch mit einem rohseitigen Zuströmraum verbindet, der seinerseits zu einer rohseitigen Anströmseite des Filterelements führt. Durch diese Bauweise wird der zuströmende Kraftstoff gezwungen, zunächst einen vergleichsweise kleinen Heizraum zu durchströmen, in dem die Heizeinrichtung die Beheizung des Kraftstoffs bewirkt. Beispielsweise kann die Scheibe aus einem Metall bestehen. Insbesondere wirkt die Scheibe dabei als Wärmeleitplatte, die einerseits wärmeleitend mit wenigstens einem Heizelement der Heizeinrichtung verbunden ist und andererseits direkt mit dem Kraftstoff in Kontakt steht. Ein derartiges Heizelement kann beispielsweise durch ein PTC-Element gebildet sein, wobei PTC für "Positive Temperature Coefficient" steht.

Besonders vorteilhaft ist eine Weiterbildung, bei welcher die Scheibe als Ringscheibe ausgestaltet ist, die einen an der Innenseite des Deckels ausgebildeten, axial nach innen abstehenden zentralen Anschlussstutzen in Umfangsrichtung umschließt. Der Auslassstutzen mündet in einem reinseitigen, also einem auf der Reinseite bzw. im Reinraum angeordneten, Abströmraum, der vom Anschlussstutzen in Umfangsrichtung umschlossen ist. Hierdurch ergibt sich ein besonders einfacher Aufbau für die Heizeinrichtung im Deckel. Innerhalb des Gehäuses strömt der Kraftstoff von einer Abströmseite des Filterelements im Reinraum bzw. auf der Reinseite bis zum Abströmraum.

Ein erfindungsgemäßes Verfahren zum Herstellen einer Kraftstofffilterkartusche der vorstehend beschriebenen Art umfasst folgende Schritte:

| | |
|---|---|
| Erster Schritt: | Einsetzen des Filterelements in das Gehäuse. |
| Zweiter Schritt: | Einsetzen des Deckels und der Heizeinrichtung in das Gehäuse. |
| Dritter Schritt: | Aufsetzen der Druckplatte, derart, dass der Basisstecker und gegebenenfalls der Einlassstutzen, sofern er am Deckel ausgebildet ist, und gegebenenfalls der Auslassstutzen, sofern er am Deckel ausgebildet ist, die jeweilige Durchtrittsöffnung axial durchsetzen |
| Vierter Schritt: | Vercrimpen des Crimprings mit dem Gehäuserand. |

Zweckmäßig kann nachfolgend in einem fünften Schritt der Adapterstecker mit dem Basisstecker gesteckt werden.

Die Anbringung des Crimprings kann im dritten Schritt erfolgen, wenn der Crimpring fest mit der Druckplatte verbunden ist, oder im vierten Schritt erfolgen, wenn der Crimpring bezüglich der Druckplatte lose ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine isometrische Schnittansicht einer Kraftstofffilterkartusche im Bereich eines Deckels,
- Fig. 2: eine isometrische Ansicht des Deckels von oben bzw. von außen,
- Fig. 3: eine isometrische Ansicht des Deckels von unten bzw. von innen,
- Fig. 4: eine isometrische Ansicht eines Adaptersteckers,
- Fig. 5: eine isometrische Ansicht der Kraftstofffilterkartusche ohne Adapterstecker,
- Fig. 6: eine isometrische Ansicht der Kraftstofffilterkartusche mit Adapterstecker.

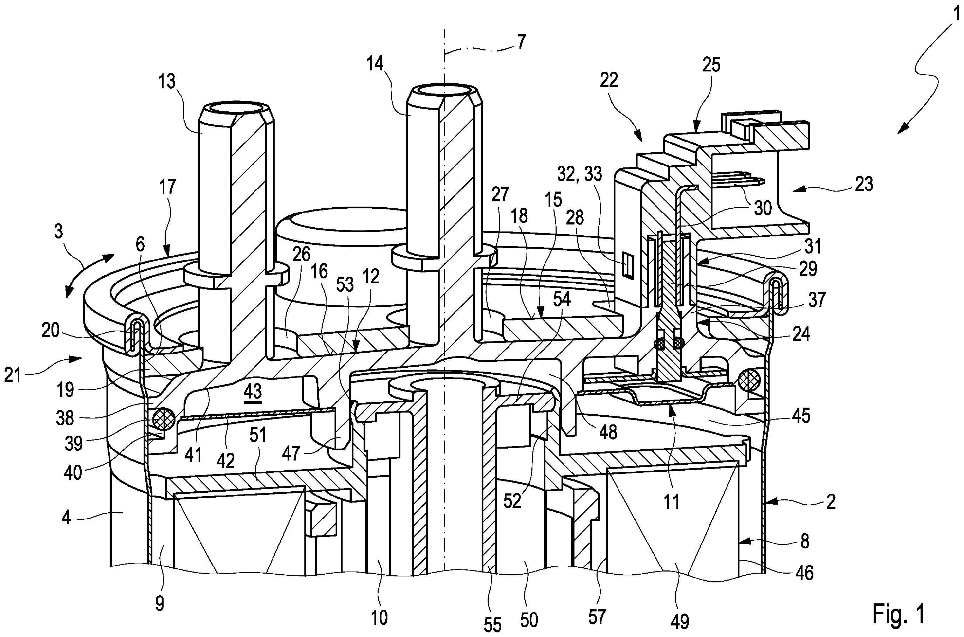

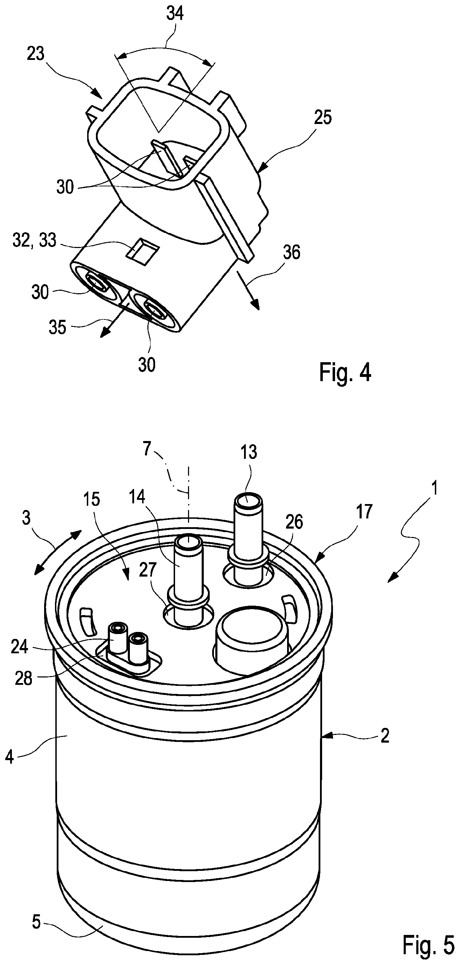

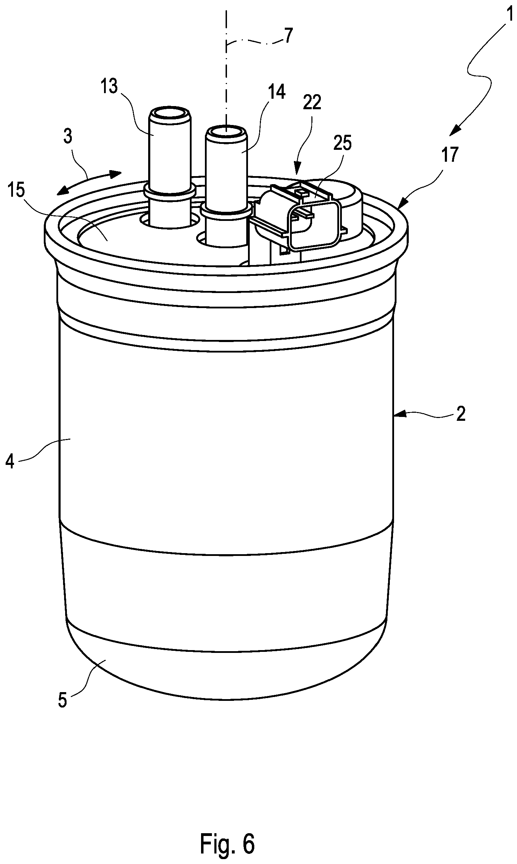

Entsprechend den Fig. 1 bis 6 umfasst eine Kraftstofffilterkartusche 1, die im Folgenden auch kurz als Kartusche 1 bezeichnet werden kann und die zum Filtern und zum Beheizen von Kraftstoff zur Versorgung einer Brennkraftmaschine dient, ein Gehäuse 2, das gemäß den Fig. 5 und 6 topfförmig ausgestaltet ist, das einen in der durch Doppelpfeile angedeuteten Umfangsrichtung 3 umlaufenden Gehäusemantel 4, einen Gehäuseboden 5 und eine dem Gehäuseboden 5 axial gegenüberliegende Gehäuseöffnung 6 aufweist. Die Axialrichtung ist dabei durch eine Längsmittelachse 7 des Gehäuses 2 bzw. der Kartusche 1 definiert und erstreckt sich parallel zur Längsmittelachse 7. Die Radialrichtung verläuft quer zur Axialrichtung und die Umfangsrichtung 3 läuft um die Längsmittelachse 7 um.

Ferner umfasst die Kartusche 1 ein Filterelement 8 zum Filtern des Kraftstoffs, das in das Gehäuse 2 eingesetzt ist und das im Gehäuse 2 einen Rohraum 9 von einem Reinraum 10 trennt. Ferner umfasst die Kartusche 1 eine elektrische Heizeinrichtung 11 zum Beheizen des Kraftstoffs, die im Gehäuse 2 angeordnet ist. Ein Deckel 12 ist in das Gehäuse 2 eingesetzt und verschließt dabei die Gehäuseöffnung 6. Ferner sind ein Einlassstutzen 13, der mit dem Rohraum 9 fluidisch verbunden ist, sowie ein Auslassstutzen 14 vorgesehen, der mit dem Reinraum 10 fluidisch verbunden ist. Im gezeigten Beispiel sind der Einlassstutzen 13 und der Auslassstutzen 14 am Deckel 12 ausgebildet. Ebenso ist denkbar, den Einlassstutzen 13 und/oder den Auslassstutzen 14 am Gehäuse 2, vorzugsweise am Gehäuseboden 5 auszubilden. Durch den Einlassstutzen 13 wird der Kraftstoff der Kartusche 1 zugeführt. Durch den Auslassstutzen 14 wird der Kraftstoff aus der Kartusche 1 abgeführt.

Außerdem ist die Kartusche 1 hier mit einer Druckplatte 15 ausgestattet, die an einer vom Gehäuseboden 5 abgewandten Außenseite 16 des Deckels 12 axial am Deckel 12 anliegt. Schließlich ist ein Crimpring 17 vorgesehen, der sich an einer vom Gehäuseboden 5 abgewandten Außenseite 18 der Druckplatte 15 an einem Plattenrand 19 der Druckplatte 15 axial abstützt. Der Crimpring 17 ist ferner mit einem Gehäuserand 20 vercrimpt, der am Mantel 4 stirnseitig ausgebildet ist und der die Gehäuseöffnung 6 einfasst. Durch die Vercrimpung zwischen Crimpring 17 und Gehäuserand 20 wird eine hochfeste Crimpverbindung 21 geschaffen, die im Beispiel als Bördelverbindung ausgestaltet ist.

Eine derartige Druckplatte 15 erzeugt eine möglichst großflächige Abstützung des Deckels 12. Hierzu liegt die Druckplatte 15 radial beabstandet vom Crimpring 17 und/oder vom ringförmig umlaufenden Plattenrand 19 flächig am Deckel 12 an. Insbesondere liegt die Druckplatte 15 innerhalb einer vom Crimpring 17 eingefassten Crimpringöffnung flächig am Deckel 12 an.

Für den Betrieb der Heizeinrichtung 11 muss diese mit einer externen elektrischen Energieversorgung elektrisch verbunden werden. Zu diesem Zweck ist die Kartusche 1 mit einem Elektroanschluss 22 ausgestattet. Dieser Elektroanschluss 22 ist einerseits mit der Heizeinrichtung 11 elektrisch leitend verbunden und besitzt andererseits eine elektromechanische Schnittstelle 23, über die der Elektroanschluss 22 mit der externen Energieversorgung elektrisch verbunden werden kann.

Bei der hier vorgestellten Kartusche 1 umfasst der Elektroanschluss 22 einen am Deckel 12 ausgebildeten Basisstecker 24 und einen bezüglich des Basissteckers 24 separaten Adapterstecker 25. Während der Basisstecker 24 mit der Heizeinrichtung 11 elektrisch leitend verbunden ist, weist der Adapterstecker 25 die vorstehend genannte Schnittstelle 23 zur Verbindung mit der Energieversorgung auf. Der Adapterstecker 25 ist mit dem Basisstecker 24 steckbar. Im gesteckten Zustand bilden sie gemeinsam den Elektroanschluss 22.

Der Einlassstutzen 13, der Auslassstutzen 14 und der Basisstecker 24 sind am Deckel 12 angeordnet und stehen von dessen Außenseite 16 axial nach außen ab. Ferner erstrecken sich Einlassstutzen 13, Auslassstutzen 14 und Basisstecker 24 parallel zueinander und parallel zur Längsmittelachse 7, also axial und durchsetzen dabei die Druckplatte 15 axial. Hierzu besitzt die Druckplatte 15 radial beabstandet vom Plattenrand 19 wenigstens eine in der Umfangsrichtung 3 geschlossene Durchtrittsöffnung 26, 27, 28. Im hier gezeigten, bevorzugten Beispiel sind drei separate Durchtrittsöffnungen 26, 27, 28 vorgesehen. Die erste Durchtrittsöffnung 26 ist dem Einlassstutzen 13 zugeordnet. Die zweite Durchtrittsöffnung 27 ist dem Auslassstutzen 14 zugeordnet. Die dritte Durchtrittsöffnung 28 ist dem Basisstecker 24 zugeordnet. Im montierten Zustand, der in den Fig. 1, 5 und 6 gezeigt ist, sind der Einlassstutzen 13, der Auslassstutzen 14 und der Basisstecker 24 durch die jeweilige Durchtrittsöffnung 26, 27, 28 axial hindurchgeführt. Um dies zu ermöglichen, sind die quer zur Axialrichtung vorgesehenen Querschnitte von Einlassstutzen 13, Auslassstutzen 14 und Basisstecker 24 jeweils kleiner als der Öffnungsquerschnitt der zugehörigen Durchtrittsöffnung 26, 27, 28.

Wenn der Adapterstecker 25 mit dem Basisstecker 24 zur Komplettierung des Elektroanschlusses 22 gesteckt ist, sind elektrische Kontakte 29 des Basissteckers 24 mit elektrischen Kontakten 30 des Adaptersteckers 25 elektrisch verbunden. Zweckmäßig ist zum Stecken von Adapterstecker 25 und Basisstecker 24 eine axiale Steckverbindung 31 vorgesehen, die beim axialen Stecken gleichzeitig eine elektrische Verbindung und eine mechanische Verbindung zwischen Adapterstecker 25 und Basisstecker 24 erzeugt. Insbesondere kann diese Steckverbindung 31 optional mit einer Verrastung 32 ausgestattet sein, die den Adapterstecker 25 gegen ein Abziehen vom Basisstecker 24 entgegen der axialen Steckrichtung sichert. Die Verrastung 32 erzeugt hierzu eine mechanische Verbindung zwischen Adapterstecker 25 und Basisstecker 24, zweckmäßig durch Formschluss. Erkennbar ist in den Fig. 1 und 4 rein exemplarisch eine Rastöffnung 33 vorgesehen, die am Adapterstecker 25 ausgebildet ist und in die eine hier nicht erkennbare Rastnase eingreift, die am Basisstecker 24 ausgebildet ist.

Im hier gezeigten Beispiel ist der Adapterstecker 25 als Winkelstecker ausgestaltet, um einen in Fig. 4 eingetragenen Neigungswinkel 34 zwischen einer ersten Steckrichtung 35 und einer zweiten Steckrichtung 36 zu realisieren. Die erste Steckrichtung 35 ist durch die Steckverbindung 31 zwischen Adapterstecker 25 und Basisstecker 24 definiert und erstreckt sich hier parallel zur Längsmittelachse 7, also axial. Die zweite Steckrichtung 36 ist durch die Schnittstelle 23 des Adaptersteckers 25 definiert. In dieser zweiten Steckrichtung 36 muss ein zur Schnittstelle 23 komplementärer, nicht gezeigter Anschlussstecker, der mit der Energieversorgung verbunden ist, gesteckt werden, um die elektromechanische Verbindung zu erzielen. Grundsätzlich können die beiden Steckrichtungen 35, 36 parallel zueinander verlaufen, also axial. Gezeigt ist jedoch eine Ausgestaltung des Adaptersteckers 25 als Winkelstecker, um einen von 0 Grad abweichenden Neigungswinkel 34 zwischen den beiden Steckrichtungen 35, 36 zu ermöglichen. Im Beispiel beträgt der Neigungswinkel 34 etwa 90°. Es ist klar, dass grundsätzlich beliebige Neigungswinkel realisierbar sind.

Beim hier gezeigten Beispiel ist der Adapterstecker 25 außerdem so geformt, dass er sich im gesteckten Zustand radial bis zum Crimpring 17 erstreckt, so dass sich eine radiale Überlappung zwischen Adapterstecker 25 und Crimpring 17 ergibt, und zwar in einer Axialprojektion. Erkennbar besitzt der Adapterstecker 25 einen Axialabstand zum Crimpring 17. Dennoch kann diese radiale Überlappung zwischen Adapterstecker 25 und Crimpring 17 dazu führen, dass die Crimpverbindung 21 bei gestecktem Adapterstecker 25 nicht herstellbar ist. Bei fehlendem Adapterstecker 25 ist jedoch axial oberhalb des Crimprings 17 ausreichend Freiraum vorhanden, um ein Crimpwerkzeug zum Herstellen der Crimpverbindung 21 anzuordnen.

Vorteilhaft ist der Deckel 12 aus einem Kunststoff hergestellt. Insbesondere können dann der Einlassstutzen 13, der Auslassstutzen 14 und ein Steckergehäuse 37 des Basissteckers 24 integral am Deckel 12 ausgeformt sein. Der Deckel 12 bildet somit mit dem Einlassstutzen 13, dem Auslassstutzen 14 und dem Steckergehäuse 37 ein einstückig hergestelltes Spritzformteil.

Der Deckel 12 weist radial außen einen umlaufenden Deckelrand 38 auf. An diesem Deckelrand 38 kann der Deckel 12 über eine radial wirkende Dichtung 39, die nachfolgend auch als Radialdichtung 39 bezeichnet werden kann, radial am Mantel 4 abgestützt sein. Die Radialdichtung 39 kann dabei integral am Deckelrand 38 ausgeformt sein. Ebenso ist denkbar, die Radialdichtung 39 an den Deckelrand 38 anzuspritzen oder anzuschäumen. Gezeigt ist jedoch eine Ausführungsform, bei der die Radialdichtung 39 durch ein separates Bauteil gebildet ist, das in eine am Deckelrand 38 ausgebildete, umlaufende Umfangsnut 40 eingesetzt ist.

Der Crimpring 17 kann bezüglich der Druckplatte 15 lose angeordnet sein, also ohne feste Verbindung zur Druckplatte 15 axial daran anliegen. Ebenso ist denkbar, den Crimpring 17 an der Druckplatte 15 zu fixieren, beispielsweise mittels einer Kleb-, Schweiß- oder Lötverbindung. Die Durchtrittsöffnungen 26, 27, 28 sind in der Druckplatte 15 zweckmäßig so positioniert, dass sie radial vom Crimpring 17 beabstandet sind. Die Druckplatte 15 ist zweckmäßig aus Metall hergestellt, z.B. als Stanzteil, bei dem gleichzeitig auch die Durchtrittsöffnungen 26, 27, 28 hergestellt werden können. Der Crimpring 17 und das Gehäuse 2 sind Metallteile, vorzugsweise Blechformteile. Das Gehäuse 2 ist bevorzugt ein Tiefziehteil.

Gemäß Fig. 1 ist die Heizeinrichtung 11 ausschließlich am Deckel 12 ausgebildet und hierzu an einer dem Gehäuseboden 5 zugewandten Innenseite 41 des Deckels 12 angeordnet. Die Heizeinrichtung 11 weist eine Scheibe 42 auf. Axial zwischen dieser Scheibe 42 und dem Deckel 12 ist ein Heizraum 43 ausgebildet. In diesem Heizraum 43 steht der Kraftstoff unmittelbar mit der Scheibe 42 in Kontakt. Die Heizeinrichtung 11 kann ferner wenigstens ein hier nicht gezeigtes elektrisches Heizelement aufweisen, um Wärme in die Scheibe 42 einzuleiten. Ein derartiges Heizelement kann beispielsweise durch ein PTC-Element gebildet sein. Somit kann Wärme im Heizraum 43 von der Scheibe 42 direkt in den Kraftstoff eingeleitet werden.

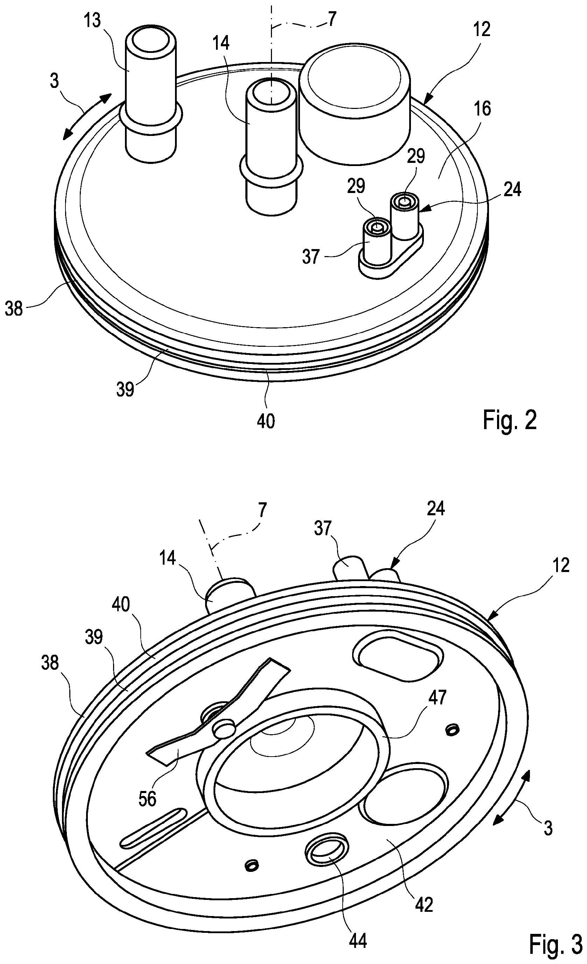

Der Einlassstutzen 13 mündet nun in diesen Heizraum 43. Die Scheibe 42 besitzt gemäß Fig. 3 zumindest eine axiale Verbindungsöffnung 44, durch die hindurch der Heizraum 43 fluidisch mit einem rohseitigen Zuströmraum 45 verbunden ist. Dieser Zuströmraum 45 führt dann zu einer Anströmseite 46 des Filterelements 8. Im Beispiel ist das Filterelement 8 als Ringfilterelement konfiguriert, das im Betrieb radial von außen nach innen durchströmt wird. Dementsprechend ist die Anströmseite 46 des Filterelements 8 hier radial außen zu finden, während sich eine Abströmseite 57 des Filterelements 8 radial innen befindet. Ferner ist im Beispiel die Scheibe 42 als Ringscheibe ausgestaltet, so dass sie einen Anschlussstutzen 47 des Deckels 12 in Umfangsrichtung 3 einfasst. Der Anschlussstutzen 47 ist dabei an der Innenseite 41 des Deckels 12 ausgebildet und steht davon axial nach innen ab. Der Anschlussstutzen 47 umschließt in der Umfangsrichtung 3 einen Abströmraum 48, in den der Auslassstutzen 14 mündet. Ferner ist das Filterelement 8 reinseitig an diesen Anschlussstutzen 47 angeschlossen, so dass der Abströmraum 48 fluidisch mit der Reinseite 10 verbunden ist.

Im Beispiel der Fig. 1 weist das Filterelement 8 einerseits einen Filterkörper 49 zum Filtern des Kraftstoffs und andererseits einen Wasserabscheider 50 auf, der im Kraftstoff enthaltendes Wasser vom Kraftstoff trennt. Das Filterelement 8 weist außerdem an einer dem Deckel 12 zugewandten axialen Stirnseite eine offene Endscheibe 51 auf, von der ein umlaufender Kragen 52 axial absteht. Mit diesem Kragen 52 ist das Filterelement 8 in den Anschlussstutzen 47 axial eingesteckt, um im Reinraum 10 eine fluidische Verbindung von der Abströmseite 57 des Filterelements 8 zum Zuströmraum 48 herzustellen. Am Kragen 52 ist hierbei eine Radialdichtung 53 ausgeformt, die mit dem Anschlussstutzen 47 zusammenwirkt. Im Bereich dieser Dichtung 53 ist ein Ringkragen 54 abgestützt, der ein Tauchrohr 55 in der Umfangsrichtung 3 einfasst. Das Tauchrohr 55 taucht axial in den Reinraum 10 ein und verbindet somit den Reinraum 10 innerhalb des Wasserabscheiders 50 mit dem Zuströmraum 48.

In Fig. 3 ist außerdem eine Vorspannfeder 56 gezeigt, mit deren Hilfe das vorstehend genannte Heizelement gegen die Scheibe 42 angepresst werden kann, um die Wärmeübertragung zwischen Heizelement und Scheibe 42 zu verbessern.

Nachfolgend wird ein Verfahren zum Herstellen einer derartigen Kartusche 1 näher beschrieben.

Zunächst wird das Filterelement 8 in das Gehäuse 2 eingesetzt. Anschließend werden der Deckel 12 und die Heizeinrichtung 11 in das Gehäuse 2 eingesetzt. Zweckmäßig bilden dabei Deckel 12 und Heizeinrichtung 11 eine vormontierbare Baugruppe, so dass der Deckel 12 gemeinsam mit der daran montierten Heizeinrichtung 11 in das Gehäuse 2 eingesetzt werden kann.

Anschließend wird die Druckplatte 15 aufgesetzt, und zwar so, dass der Einlassstutzen 13 die erste Durchtrittsöffnung 26 axial durchsetzt, der Auslassstutzen 14 die zweite Durchtrittsöffnung 27 axial durchsetzt und der Basisstecker 24 die dritte Durchtrittsöffnung 28 axial durchsetzt. Dementsprechend ist bei diesem Vorgang der Adapterstecker 25 nicht am Basisstecker 24 angebracht.

Anschließend wird der Crimpring 17 mit dem Gehäuserand 20 vercrimpt, wobei auch hier der Adapterstecker 25 noch nicht mit dem Basisstecker 24 gesteckt ist. Der Crimpring 17 kann dabei gemeinsam mit der Druckplatte 15 oder separat zur Druckplatte 15 aufgesetzt werden, um die Vercrimpung durchzuführen. Sofern der Crimpring 17 fest mit der Druckplatte 15 verbunden ist, erfolgt mit dem Aufsetzen der Druckplatte 15 auf den Deckel 12 gleichzeitig das Aufsetzen des Crimprings 17. Ist dagegen keine feste Verbindung zwischen Crimpring 17 und Druckplatte 15 vorgesehen, kann der Crimpring 17 auch anschließend, quasi unabhängig, von der Druckplatte 15 angesetzt werden.

Erst nach dem Vercrimpen zwischen Crimpring 17 und Gehäuserand 20 wird der Adapterstecker 25 montiert, nämlich mit dem Basisstecker 24 gesteckt. Fig. 5 zeigt den Zustand nach dem Vercrimpen und vor dem Montieren des Adaptersteckers 25. Fig. 6 zeigt den Zustand nach dem Vercrimpen und nach dem Montieren des Adaptersteckers 25.

## Patentansprüche

1. Kraftstofffilterkartusche zum Filtern und Beheizen von Kraftstoff für eine Brennkraftmaschine,
- mit einem topfförmigen Gehäuse (2), das einen in Umfangsrichtung (3) umlaufenden Gehäusemantel (4), einen Gehäuseboden (5) und eine dem Gehäuseboden (5) axial gegenüberliegende Gehäuseöffnung (6) aufweist,
- mit einem in das Gehäuse (2) eingesetzten Filterelement (8) zum Filtern des Kraftstoffs, das im Gehäuse (2) einen Rohraum (9) von einem Reinraum (10) trennt,
- mit einer im Gehäuse (2) angeordneten elektrischen Heizeinrichtung (11) zum Beheizen des Kraftstoffs,
- mit einem in das Gehäuse (2) eingesetzten Deckel (12) zum Verschließen der Gehäuseöffnung (6),
- mit einem Einlassstutzen (13) für den Kraftstoff, der mit dem Rohraum (9) fluidisch verbunden ist,
- mit einem Auslassstutzen (14) für den Kraftstoff, der mit dem Reinraum (10) fluidisch verbunden ist,
- mit einer Druckplatte (15), die an einer vom Gehäuseboden (5) abgewandten Außenseite (16) des Deckels (12) axial am Deckel (12) anliegt,- mit einem Elektroanschluss (22) zur elektrischen Energieversorgung der Heizeinrichtung (11), der elektrisch leitend mit der Heizeinrichtung (11) verbunden ist,
- wobei der Elektroanschluss (22) einen am Deckel (12) ausgebildeten Basisstecker (24) aufweist, der mit der Heizeinrichtung (11) elektrisch leitend verbunden ist und der mit einem Adapterstecker (25) steckbar ist, der mit der Energieversorgung elektrisch verbindbar ist,
- wobei der Basisstecker (24) am Deckel (12) von dessen Außenseite (16) axial nach außen vorsteht,
- wobei die Druckplatte (15) radial beabstandet vom Plattenrand (19) eine in Umfangsrichtung (3) geschlossene Durchtrittsöffnung (28) für den Basisstecker (24) aufweist,
- wobei der Basisstecker (24) durch die Durchtrittsöffnung (28) axial hindurchgeführt ist,
**gekennzeichnet durch**
- einen Crimpring (17), der sich an einer vom Gehäuseboden (5) abgewandten Außenseite (18) der Druckplatte (15) an einem Plattenrand (19) der Druckplatte (15) axial abstützt und der mit einem die Gehäuseöffnung (6) einfassenden, am Gehäusemantel (4) ausgebildeten, stirnseitigen Gehäuserand (20) vercrimpt ist.

2. Kartusche nach Anspruch 1,
**dadurch gekennzeichnet,**
**dass** der Elektroanschluss (22) außerdem den Adapterstecker (25) aufweist, der mit dem Basisstecker (24) axial gesteckt ist, so dass elektrische Kontakte (29) des Basissteckers (24) mit elektrischen Kontakten (30) des Adaptersteckers (25) elektrisch verbunden sind.

3. Kartusche nach Anspruch 2,
**dadurch gekennzeichnet,**
**dass** der Adapterstecker (25) mittels einer axialen Steckverbindung (31) mechanisch und elektrisch mit dem Basisstecker (24) verbunden ist.

4. Kartusche nach Anspruch 3,
**dadurch gekennzeichnet,**
**dass** die Steckverbindung (31) eine Verrastung (32) aufweist, welche die mechanische Verbindung zwischen Adapterstecker (25) und Basisstecker (24) gegen ein Herausziehen entgegen der axialen Steckrichtung (35) sichert.

5. Kartusche nach einem der Ansprüche 2 bis 4,
**dadurch gekennzeichnet,**
**dass** sich der mit dem Basisstecker (24) gesteckte Adapterstecker (25) radial bis zum Crimpring (17) erstreckt.

6. Kartusche nach einem der Ansprüche 1 bis 5,
**dadurch gekennzeichnet,**
- **dass** der Einlassstutzen (13) und/oder der Auslassstutzen (14) am Deckel (12) von dessen Außenseite (16) axial nach außen vorstehen,
- **dass** die Druckplatte (15) radial beabstandet vom Plattenrand (19) wenigstens eine in Umfangsrichtung (3) geschlossene Durchtrittsöffnung (26, 27) für den Einlassstutzen (13) und/oder den Auslassstutzen (14),
- **dass** der Einlassstutzen (13) und/oder der Auslassstutzen (14) durch die jeweilige Durchtrittsöffnung (26, 27) axial hindurchgeführt ist/sind.

7. Kartusche nach Anspruch 6,
**dadurch gekennzeichnet,**
**dass** separate Durchtrittsöffnungen (26, 27, 28) für den Basisstecker (24) einerseits und den Einlassstutzen (13) und/oder den Auslassstutzen (14) andererseits vorgesehen sind.

8. Kartusche nach einem der Ansprüche 1 bis 7,
**dadurch gekennzeichnet,**
**dass** die jeweilige Durchtrittsöffnung (26, 27, 28) radial vom Crimpring (17) beabstandet ist.

9. Kartusche nach einem der Ansprüche 1 bis 8,
**dadurch gekennzeichnet,**
- **dass** der Deckel (12) aus Kunststoff hergestellt ist,
- **dass** ein Steckergehäuse (37) des Basissteckers (24) integral am Deckel (12) ausgeformt ist.

10. Kartusche nach einem der Ansprüche 1 bis 9,
**dadurch gekennzeichnet,**
- **dass** der Deckel (12) aus Kunststoff hergestellt ist,
- **dass** der Einlassstutzen (13) und/oder der Auslassstutzen (14) integral am Deckel (12) ausgeformt sind.

11. Kartusche nach einem der Ansprüche 1 bis 10,
**dadurch gekennzeichnet,**
**dass** der Deckel (12) an einem Deckelrand (38) über eine Radialdichtung (39) radial am Mantel (4) abgestützt ist.

12. Kartusche nach einem der Ansprüche 1 bis 11,
**dadurch gekennzeichnet,**
**dass** die Heizeinrichtung (11) am Deckel (12) ausgebildet ist und an einer dem Gehäuseboden (5) zugewandten Innenseite (41) des Deckels (12) angeordnet ist.

13. Kartusche nach Anspruch 12,
**dadurch gekennzeichnet,**
- **dass** die Heizeinrichtung (11) eine Scheibe (42) aufweist, die einen axial zwischen der Scheibe (42) und dem Deckel (12) ausgebildeten Heizraum (43) axial begrenzt,
- **dass** der Einlassstutzen (13) mit dem Heizraum (43) fluidisch verbunden ist,
- **dass** die Scheibe (42) wenigstens eine axiale Verbindungsöffnung (44) aufweist, die den Heizraum (43) fluidisch mit einem rohseitigen Zuströmraum (45) verbindet, der zu einer Anströmseite (46) des Filterelements (8) führt.

14. Kartusche nach Anspruch 13,
**dadurch gekennzeichnet,**
- **dass** die Scheibe (42) als Ringscheibe ausgestaltet ist, die einen an der Innenseite (41) des Deckels (12) ausgebildeten, axial nach innen abstehenden zentralen Anschlussstutzen (47) in Umfangsrichtung (3) umschließt,
- **dass** der Auslassstutzen (14) in einem Abströmraum (48) mündet, der vom Anschlussstutzen (47) in Umfangsrichtung (3) umschlossen ist.

15. Verfahren zum Herstellen einer Kraftstofffilterkartusche nach einem der Ansprüche 1 bis 14,
- bei dem zuerst das Filterelement (8) in das Gehäuse (2) eingesetzt wird,
- bei dem anschließend der Deckel (12) und die Heizeinrichtung (11) in das Gehäuse (2) eingesetzt werden,
- bei dem anschließend die Druckplatte (15) aufgesetzt wird, so dass der Basisstecker (24) die jeweilige Durchtrittsöffnung (28) axial durchsetzt,
- bei dem anschließend der Crimpring (17) mit dem Gehäuserand (20) vercrimpt wird.

16. Verfahren nach Anspruch 15,
**dadurch gekennzeichnet,**
**dass** nach dem Vercrimpen des Crimprings (17) mit dem Gehäuserand (20) der Adapterstecker (25) mit dem Basisstecker (24) gesteckt wird.

## Claims

1. A fuel filter cartridge for filtering and heating fuel for an internal combustion engine,
- comprising a cup-shaped housing (2), which has a housing jacket (4) circulating in the circumferential direction (3), a housing bottom (5), and a housing opening (6) located axially opposite the housing bottom (5),
- comprising a filter element (8), which is inserted into this housing (2) and which separates a dirty room (9) from a clean room (10), for filtering the fuel,
- comprising an electrical heating device (11) arranged in the housing (2) for heating the fuel,
- comprising a cover (12) inserted into the housing (2) for closing the housing opening (6),
- comprising an inlet nozzle (13) for the fuel, which is fluidically connected to the dirty room (9),
- comprising an outlet nozzle (14) for the fuel, which is fluidically connected to the clean room (10),
- comprising a pressure plate (15), which abuts axially on the cover (12) on an outer side (16) of the cover (12), which faces away from the housing bottom (5),
- comprising an electrical connection (22) for the electrical power supply of the heating device (11) and which is connected to the heating device (11) in an electroconductive manner,
- wherein the electrical connection (22) has a base plug (24), which is embodied on the cover (12) and which is connected to the heating device (11) in an electroconductive manner and which can be plugged into an adapter plug (25), which can be electrically connected to the power supply,
- wherein, on the cover (12), the base plug (24) protrudes axially outwards from the outer side (16) thereof,
- wherein, radially spaced apart from the plate edge (19), the pressure plate (15) has a passage opening (28), which is closed in the circumferential direction (3), for the base plug (24),
- wherein the base plug (24) is guided axially through the passage opening (28),
**characterized by**
- a crimp ring (17), which is supported axially on a plate edge (19) of the pressure plate (15) on an outer side (18) of the pressure plate (15), which faces away from the housing bottom (5), and which is crimped with a frontside housing edge (20), which surrounds the housing opening (6) and is embodied on the housing jacket (4).

2. The cartridge according to claim 1,
**characterized in**
**that** the electrical connection (22) furthermore has the adapter plug (25), which is axially plugged into the base plug (24) so that electrical contacts (29) of the base plug (24) are electrically connected to electrical contacts (30) of the adapter plug (25).

3. The cartridge according to claim 2,
**characterized in**
**that** the adapter plug (25) is mechanically and electrically connected to the base plug (24) by means of an axial plug connection (31).

4. The cartridge according to claim 3,
**characterized in**
**that** the plug connection (31) has a catch mechanism (32), which secures the mechanical connection between adapter plug (25) and base plug (24) against being pulled out opposite to the axial plug direction (35).

5. The cartridge according to one of claims 2 to 4,
**characterized in**
**that** the adapter plug (25), which is plugged into the base plug (24), extends radially to the crimp ring (17).

6. The cartridge according to one of claims 1 to 5,
**characterized in**
- **that** the inlet nozzle (13) and/or the outlet nozzle (12) on the cover (12) protrude axially outwards from the outer side (16) thereof,
- **that**, radially spaced apart from the plate edge (19), the pressure plate (15) has at least one passage opening (26, 27), which is closed in the circumferential direction (3), for the inlet nozzle (13) and/or for the outlet nozzle (14),
- **that** the inlet nozzle (13) and/or the outlet nozzle (14) are guided axially through the respective passage opening (26, 27).

7. The cartridge according to claim 6,
**characterized in**
**that** provision is made for separate passage openings (26, 27, 28) for the base plug (24) on one side and the inlet nozzle (13) and/or the outlet nozzle (14) on the other side.

8. The cartridge according to one of claims 1 to 7,
**characterized in**
**that** the respective passage opening (26, 27, 28) is radially spaced apart from the crimp ring (17).

9. The cartridge according to one of claims 1 to 8,
**characterized in**
- **that** the cover (12) is made of plastic,
- **that** a plug housing (37) of the base plug (24) is integrally molded on the cover (12).

10. The cartridge according to one of claims 1 to 9,
**characterized in**
- **that** the cover (12) is made of plastic,
- **that** the inlet nozzle (13) and/or the outlet nozzle (14) are integrally molded on the cover (12).

11. The cartridge according to one of claims 1 to 10,
**characterized in**
**that** the cover (12) is supported radially on the jacket (4) on a cover edge (38) via a radial seal (39).

12. The cartridge according to one of claims 1 to 11,
**characterized in**
**that** the heating device (11) is embodied on the cover (12) and is arranged on an inner side (41) of the cover (12), which faces the housing bottom (5).

13. The cartridge according to claim 12,
**characterized in**
- **that** the heating device (11) has a disk (42), which axially defines a combustion chamber (43), which is embodied axially between the disk (42) and the cover (12),
- **that** the inlet nozzle (13) is fluidically connected to the combustion chamber (43),
- **that** the disk (42) has at least one axial connection opening (44), which fluidically connects the combustion chamber (43) to a dirty-side inflow area (45), which leads to a feed side (46) of the filter element (8).

14. The cartridge according to claim 13,
**characterized in**
- **that** the disk (42) is embodied as annular disk, which encloses a central connecting nozzle (47), which is embodied on the inner side (41) of the cover (12), protrudes axially inwards, in the circumferential direction (3),
- **that** the outlet nozzle (14) leads into a feed room (48), which is enclosed by the connecting nozzle (47) in the circumferential direction (3).

15. A method for producing a fuel filter cartridge according to one of claims 1 to 14,
- in the case of which the filter element (8) is inserted into the housing first,
- in the case of which the cover (12) and the heating device (11) are inserted into the housing (2) afterwards,
- in the case of which the pressure plate (15) is attached afterwards so that the base plug (24) axially permeates the respective passage opening (28),
- in the case of which the crimp ring (17) is crimped with the housing edge (20) afterwards.

16. The method according to claim 15,
**characterized in that** the adapter plug (25) is plugged into the base plug (24) after crimping the crimp ring (17) with the housing edge (20).

## Revendications

1. Cartouche filtrante à carburant pour le filtrage et le chauffage de carburant pour un moteur à combustion interne,
- avec un boîtier en forme de pot (2) qui présente une gaine de boîtier (4) sur le pourtour en direction circonférentielle (3), un fond de boîtier (5) et une ouverture de boîtier (6) opposée axialement au fond de boîtier (5),
- avec un élément de filtrage (8) inséré dans le boîtier (2) pour filtrer le carburant, qui sépare dans le boîtier (2), un espace brut (9) d'un espace propre (10),
- avec un dispositif de chauffage électrique (11) agencé dans le boîtier (2) pour chauffer le carburant,
- avec un couvercle (12) inséré dans le boîtier (2) pour fermer l'ouverture de boîtier (6),
- avec une tubulure d'admission (13) pour le carburant, qui est reliée à l'espace brut (9) en communication de fluide,
- avec une tubulure d'évacuation (14) pour le carburant, qui est reliée à l'espace propre (10) en communication de fluide,
- avec une plate de pression (15) qui est adjacente axialement au niveau du couvercle (12) à un côté extérieur (16) du couvercle (12) détourné du fond du boîtier (5),
- avec un raccordement électrique (22) pour l'alimentation en énergie électrique du dispositif de chauffage (11) qui est relié de façon électriquement conductrice au dispositif de chauffage (11),
- dans lequel le raccordement électrique (22) présente une prise de base (24) formée au niveau du couvercle (12) qui est reliée de façon électriquement conductrice au dispositif de chauffage (11) et qui peut être branchée avec un adaptateur (25) qui peut être relié électriquement à l'alimentation en énergie,
- dans lequel la prise de base (24) dépasse axialement vers l'extérieur au niveau du côté extérieur (16) du couvercle (12),
- dans lequel la plaque de pression (15) présente à distance radialement du bord de plaque (19) une ouverture traversante (28) fermée en direction circonférentielle (3) pour la prise de base (24),
- dans lequel la prise de base (24) est conduite axialement à travers l'ouverture traversante (28),
**caractérisée par**
- un sertissage (17) qui repose axialement au niveau d'un côté extérieur (18) de la plaque de pression (15) détourné du fond de boîtier (5) au niveau d'un bord de plaque (19) de la plaque de pression (15) et qui est réalisé avec un bord de boîtier (20) du côté frontal, enserrant l'ouverture de boîtier (6), formé au niveau de la gaine de boîtier (4).

2. Cartouche selon la revendication 1,
**caractérisée en ce que**
le raccord électrique (22) présente en outre l'adaptateur (25) qui est branché axialement avec la prise de base (24), de sorte que des contacts électriques (29) de la prise de base (24) sont reliés électriquement à des contacts électriques (30) de l'adaptateur (25).

3. Cartouche selon la revendication 2,
**caractérisée en ce que**
l'adaptateur (25) est relié mécaniquement et électriquement à la prise de base (24) au moyen d'une fiche de raccordement axiale (31).

4. Cartouche selon la revendication 3,
**caractérisée en ce que**
la fiche de raccordement (31) présente un encliquetage (32) qui assure la liaison mécanique entre adaptateur (25) et prise de base (24) empêchant une extraction dans le sens opposé à la direction de branchement axiale (35).

5. Cartouche selon l'une quelconque des revendications 2 à 4,
**caractérisée en ce que**
l'adaptateur (25) branché avec la prise de base (24) s'étend radialement jusqu'au sertissage (17).

6. Cartouche selon l'une quelconque des revendications 1 à 5,
**caractérisée en ce que**
- la tubulure d'admission (13) et/ou la tubulure d'évacuation (14) dépassent axialement vers l'extérieur au niveau du côté extérieur (16) du couvercle (12),
- la plaque de pression (15) présente à distance radialement du bord de plaque (19) au moins une ouverture traversante (26, 27) fermée en direction circonférentielle (3) pour la tubulure d'admission (13) et/ou la tubulure d'évacuation (14),
- la tubulure d'admission (13) et/ou la tubulure d'évacuation (14) est/sont conduites axialement à travers l'ouverture traversante respective (26, 27).

7. Cartouche selon la revendication 6,
**caractérisée en ce que**
d'une part des ouvertures traversantes séparées (26, 27, 28) pour la prise de base (24) et d'autre part la tubulure d'admission (13) et/ou la tubulure d'évacuation (14) sont prévues.

8. Cartouche selon l'une quelconque des revendications 1 à 7,
**caractérisée en ce que**
l'ouverture traversante respective (26, 27, 28) est distante radialement du sertissage (17).

9. Cartouche selon l'une quelconque des revendications 1 à 8,
**caractérisée en ce que**
- le couvercle (12) est fabriqué en matière plastique,
- un boîtier de prise (37) de la prise de base (24) est constitué d'un seul tenant au niveau du couvercle (12).

10. Cartouche selon l'une quelconque des revendications 1 à 9,
**caractérisée en ce que**
- le couvercle (12) est fabriqué en matière plastique,
- la tubulure d'admission (13) et/ou la tubulure d'évacuation (14) est constituée d'un seul tenant au niveau du couvercle (12).

11. Cartouche selon l'une quelconque des revendications 1 à 10,
**caractérisée en ce que**
le couvercle (12) repose au niveau d'un bord de couvercle (38) sur un joint radial (39) radialement au niveau de la gaine (4).

12. Cartouche selon l'une quelconque des revendications 1 à 11,
**caractérisée en ce que**
le dispositif de chauffage (11) est formé au niveau du couvercle (12) et est agencé au niveau d'un côté intérieur (41) du couvercle (12) tourné vers le fond du boîtier (5).

13. Cartouche selon la revendication 12,
**caractérisée en ce que**
- le dispositif de chauffage (11) présente un disque (42) qui délimite un espace de chauffage (43) formé axialement entre le disque (42) et le couvercle (12),
- la tubulure d'admission (13) est reliée en communication de fluide avec l'espace de chauffage (43),
- le disque (42) présente au moins une ouverture de liaison axiale (44) qui relie l'espace de chauffage (43) en communication de fluide avec un espace d'afflux (45) du côté brut qui conduit à un côté d'entrée de flux (46) de l'élément de filtrage (8).

14. Cartouche selon la revendication 13,
**caractérisée en ce que**
- le disque (42) est configuré comme un disque annulaire qui entoure en direction circonférentielle (3) une tubulure de raccordement (47) centrale formée au niveau du côté intérieur (41) du couvercle (12) faisant saillie axialement vers l'intérieur,
- la tubulure d'évacuation (14) débouche dans un espace de sortie de flux (48) qui est entouré par la tubulure de raccordement (47) en direction circonférentielle (3).

15. Procédé de fabrication d'une cartouche filtrante à carburant selon l'une quelconque des revendications 1 à 14,
- dans lequel l'élément de filtrage (8) est tout d'abord inséré dans le boîtier (2),
- dans lequel le couvercle (12) et le dispositif de chauffage (11) sont ensuite insérés dans le boîtier (2),
- dans lequel la plaque de pression (15) est ensuite placée de sorte que la prise de base (24) traverse axialement l'ouverture traversante (28) respective,
- dans lequel le sertissage (17) est ensuite réalisé avec le bord de boîtier (20).

16. Procédé selon la revendication 15,
**caractérisé en ce qu'**après la réalisation du sertissage (17) avec le bord de boîtier (20), l'adaptateur (25) est branché à la prise de base (24).
